Europäisches Patentamt

European Patent Office

Office européen des brevets

(11) Publication number: **0 278 182**
**A2**

## (12) EUROPEAN PATENT APPLICATION

(21) Application number: 87311478.9

(22) Date of filing: 29.12.87

(51) Int. Cl.⁴: **G01L 1/04** , G01S 3/78

(30) Priority: 06.02.87 US 11738
06.02.87 US 11628

(43) Date of publication of application:
**17.08.88 Bulletin 88/33**

(84) Designated Contracting States:
**CH DE FR GB LI**

(71) Applicant: VARO, INC.
2203 West Walnut Street
Garland Texas 75046-1426(US)

(72) Inventor: Laughlin, Richard Harold
1906 Campbell Trail
Richardson Dallas Texas 75081(US)

(74) Representative: Colgan, Stephen James et al
CARPMAELS & RANSFORD 43 Bloomsbury
Square
London WC1A 2RA.(GB)

(54) Radiant energy receiving and directing apparatus and method.

(57) A method and apparatus for receiving radiant energy to approximate a uniform and homogeneous radiant energy beam from a non-homogeneous beam by a sampling from the beam by an array of receiving ends of optical fibers. A first plurality of optical fibers have receiving ends disposed parallel to a first common plane and transmitting ends directed to a first detector. A second plurality of optical fibers have receiving ends disposed parallel to a second common plane and transmitting ends directed to a second detector. The first and second common planes are oriented with respect to each other at or predetermined angle for receiving radiant energy.

EP 0 278 182 A2

FIG. 1

## RADIANT ENERGY RECEIVING AND DIRECTING APPARATUS AND METHOD

### TECHNICAL FIELD OF THE INVENTION

This invention relates generally to methods and apparatus for detecting optical energy, and more particularly to fiber optics apparatus and methods for receiving radiant energy to determine the angle of arrival and/or the wavelength of the radiant energy.

### BACKGROUND OF THE INVENTION

U.S. Patent No. 3,992,099 to Laughlin, incorporated herein by reference, discloses a source discriminator for measuring the angle of arrival and wavelength of beams of radiant energy. Such a system is useful in combat applications as a threat warning system to provide information about the source of ranging laser beams and the like. The source discriminator described in the Laughlin Patent includes first and second planar radiant energy to receive radiant energy. Each of the detectors produces an electrical output signal corresponding to radiant energy which impinges on the detector. The output signals are used to determine the angle of arrival and wavelength of the radiant energy impinging upon the planar detectors. The detectors have an angular response approximated by the cosine function.

However, it has been found that many radiant energy beams, such as laser beams, to be detected by the device are non-homogeneous and have hot spots, or varying optical gradients, across the cross-section of the beam. This non-homogeneity of the beam adversely affects the accuracy of prior detector systems. An additional problem arises from a passivating overcoat layer typically included on the surface of prior planar detectors used in systems such as disclosed in the Laughlin 3,992,099 Patent. The passivating overcoat layer acts as a transmission line whose characteristics vary as a function as both the wavelength and the polarization of radiant energy impinging upon the passivating overcoat surface. Variations caused by the passivating overcoat thus adversely affect the accuracy cf results determined by prior detecting systems. It has also been found that reflections and shadowing from the detector mounting and detector electrode post used with prior systems can adversely effect the accuracy of the system.

A need has thus arisen for an improved radiant beam discriminator which minimizes or eliminates the effects of non-homogeneous radiant energy beams, and which reduces inaccuracies caused by passivating overcoats or mounting reflections and shadowing.

The present invention provides apparatus for receiving radiant energy, the apparatus comprising:

A plurality of first optical fibers and a plurality of second optical fibers each having a receiving end and a transmitting end, the fibers transmitting respective portions of the radiant energy, received by the apparatus, from the receiving ends to the transmitting ends. The receiving ends of the first and second fibers are disposed in respectively different common planes which are relatively orientated at a predetermined angle. First and second detecting means are also provided for receiving radiant energy from the transmitting ends of the first and second fibers.

In preferred embodiments of the invention, either the receiving ends of the first fibers are interleaved with the receiving ends of the second fibers, or the receiving ends of the first and second fibers are spaced apart. The transmitting ends of the first and second fibers may directly abut the first and second detecting means, or they may be disposed in the proximity of the first and second detecting means, or a lens may be disposed between the transmitting end of each first and second fiber and the first and second detecting means.

The first and second detecting means may be operative for summing or averaging the radient energy received from the transmitting ends of the first and second fibers to substantially reduce or eliminate any effect due to optical gradients or non-homogeneities in the radiation received by the apparatus. Alternatively, the first and second detecting means each comprise a plurality of separate detectors for detecting radiation received from the transmitting ends of the first and second fibers, the apparatus also being provided with means for summing or averaging signals from the separate detectors in order to substantially reduce or eliminate any effect due to optical gradients or non-homogeneities in the radiation received by the apparatus.

Preferably, the predetermined angle between the common planes in which the first and second fibers are disposed is between 10° and 170°.

The invention also provides a method of reducing or eliminating effect due to optical gradients or non-homogeneities in a beam of radiation, the method comprising the steps of:

providing radiation receiving ends of first and second sets of optical fibers in respective first and second planes which are relatively orientated at a predetermined angle;

detecting signals received from transmitting ends of the optical fibers; and

either as a result of the detecting step, or as a separate step, averaging or summing the detected signals in order to substantially reduce or eliminate any effects due to optical gradients or non-homogeneities in the beam of radiation.

Additionally, the receiving ends of the optical fibers may be treated or otherwise provided with a diffusing surface for the reasons set forth in our co-pending European Patent application entitled 'Diffused Surface Radiant Energy Receiver".

Embodiments of the invention will now be described with reference to the accompanying drawings in which:

FIGURE 1 is a graph of the optical gradient, expressed as relative irradiance versus cross-sectional distance, for a typical radiant energy beam;

FIGURE 2 is a representation of a photograph of a typical radiant energy beam;

FIGURE 3 is a top, somewhat, diagramatic, view of apparatus for directing radiant energy to a radiant energy detector in accordance with one embodiment of the present invention;

FIGURE 4 is a isometric drawing of an elevated front view of an array of optical fiber receiving ends in accordance with an embodiment of the present invention;

FIGURE 5 is a schematic of a side view of a first plurality of optical fibers of the embodiment of the present invention shown in FIGURE 3;

FIGURE 6 is a schematic of a side view of a first plurality of optical fibers of a second embodiment of the present invention showing each of the optical fibers connected to a separate radiant energy detector which in turn is coupled to apparatus for summing the output signals of the separate detectors;

FIGURE 7 is a side view of the transmitting end of an optical fiber directly butted to a radiant energy detector in accord with one embodiment of the present invention;

FIGURE 8 is a side view of the transmitting end of an optical fiber proximity focused on a radiant energy detector in accordance with another embodiment of the present invention;

FIGURE 9 is a side view of the transmitting end of an optical fiber coupled by a lens means to a radiant energy detector in accord with another embodiment of the present invention; and

FIGURE 10 is a top view of an embodiment of the present invention wherein a first plurality of optical fibers are not arranged to cross a second plurality of optical fibers.

## DETAILED DESCRIPTION OF THE INVENTION

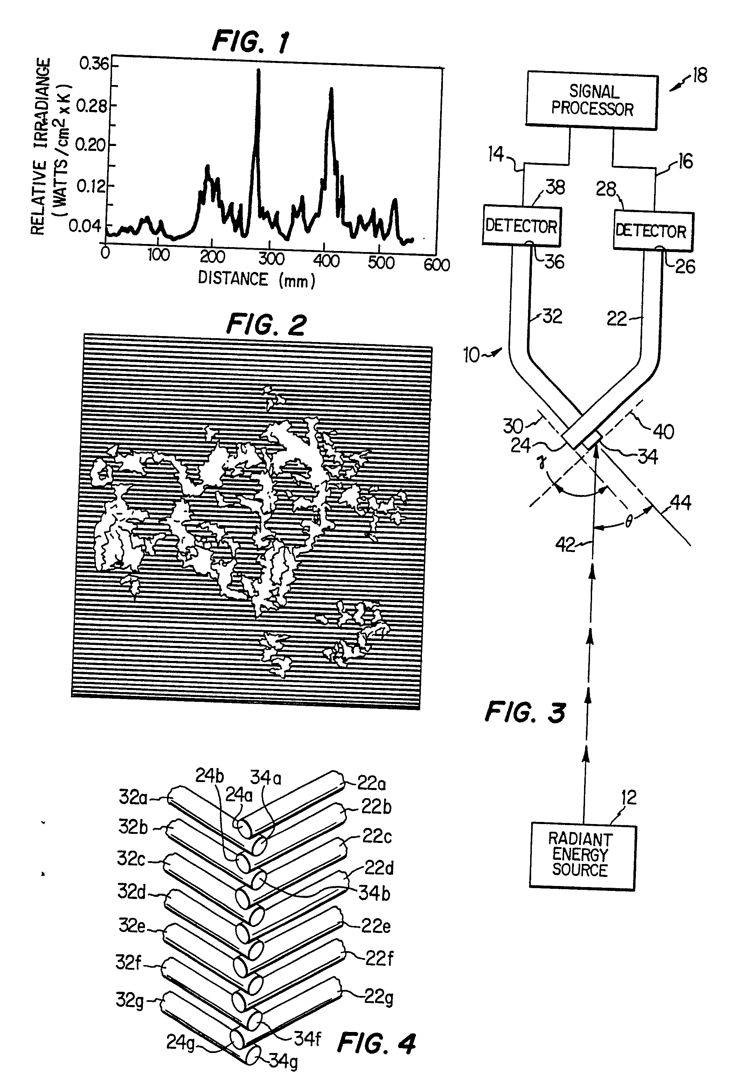

FIGURE 1 shows a typical optical gradient expressed as a function of distance for a radiant energy beam to be detected. The figure shows the relative radiance of a typical laser beam as a function of cross-sectional distance in the beam. Units for the distance in this figure are in millimeters. The units for relative radiance are in watts per centimeter squared multiplied by K where K is a constant. FIGURE 1 shows that the typical laser beam is not homogeneous across its width and has higher and lower levels of relative radiance. It is this non-homogeneous nature of the laser beam which makes it difficult to accurately measure aspects of the beam.

FIGURE 2 shows a photographic representation of a typical radiant energy beam such as would be received and transmitted with the device of the present invention. The light areas of the photograph represent areas of higher intensity radiant energy and the cross-hatched areas represent area of lower intensity radiant energy.

Radiant energy beams are not homogeneous for several reasons. One reason is that a typical generator for a radiant energy beam, such as a laser, generates a beam having multiple hot spots, or high energy areas, within the beam. Another reason is that even if a homogeneous or uniform radiant energy beam were generated, after it passed through several kilometers of the earth's atmosphere, the optical gradients within the atmosphere and the turbulence therein would cause severe variations in the relative radiant energy of the beam, resulting in a varying optical gradient across the cross section of the beam.

In FIGURE 3 there is shown a diagramatic top view of radiant energy receiving and directing apparatus of the present invention. A radiant energy receiving and directing system 10 is positioned to receive radiant energy from a radiant energy source 12 and is operably connected through signal communication channels 14 and 16 to a signal receiver and processor 18. An optical fiber 22 includes a radiant energy receiving end 24 and a radiant energy transmitting end 26. Transmitting end 26 is directed towards radiant energy detector 28. Receiving end 24 is disposed on or parallel to a first radiant energy receiving plane 30. A second optical fiber 32 includes a receiving end 34 and a transmitting end 36. Transmitting end 36 is directed towards radiant energy detector 38. Receiving end 34 is disposed on a second radiant energy receiving plane 40. Planes 30 and 40 intersect and are oriented with respect to each other at a predetermined angle $\gamma$ (by the geometric definition of opposite angles) for receiving radiant energy. The angle $\gamma$ between planes 30 and 40 is 90° in the embodiment of FIGURE 3, although the angle $\gamma$ can be varied from any angle between 10°-170°, depending upon the desired application. It will be understood that optical fibers 22 and 32 are the top optical fibers of vertical arrays of optical fibers which will be shown in subsequent figures and later described.

For purposes of explanation, the direction of impingement of a radiant energy beam impinging on receiving end 34 is shown by line 42. The longitudinal axis of fiber optic 32 at the receiving end 34 is shown by line 44. Angle $\theta$ is the angle between longitudinal axis 44 and direction of impinging radiant energy 42.

In the operation of the embodiment of the present invention shown in FIGURE 3, radiant energy is received by the radiant energy receiver and directing system 10 from the radiant energy source 12. Radiant energy impinges on the receiving ends 24 and 34 of fiber optics 22 and 32. At least a portion of the radiant energy impinging on the receiving ends 24 and 34 is transmitted along the length of the respective fiber optics 22 and 32 to the transmitting ends 26 and 36 of the respective fiber optics. At least a portion of this radiant energy is transmitted from the transmitting ends 26 and 36 of fiber optics 22 and 32 respectively to the radiant energy detectors 28 and 38 respectively. Radiant energy detectors 28 and 38 generate output signals correlated to the radiant energy transmitted to the detectors and transmit those signals via signal communication channels 14 and 16 to a signal receiver and processor 18. The signal receiver and processor comprise one or more ammeters which operate on the signal information as set forth in U.S. Patent No. 3,992,099, in order to determine the angle and wavelength of the radiant energy as described in the patent. Alternatively, receiver and processor 18 may comprise a digital computer programmed to perform the calculations described in U.S. Patent No. 3,992,099.

FIGURE 4 is an elevated isometric front view of the array of optical fiber receiving ends of the invention shown in FIGURE 3. A first plurality of optical fibers 22a - 22g is provided with receiving ends 24a - 24g, all vertically disposed on or parallel to the radiant energy receiving plane 30, not shown in the FIGURE. Similarly, a second plurality of optical fibers 32a - 32g is provided also having radiant energy receiving ends 34a - 34g disposed on or parallel to the second radiant energy receiving plane 40, not shown in the FIGURE. The receiving ends 24a - 24g of the first plurality of optical fibers 22a - 22g are interleaved and crossed with the receiving ends 34a - 34g of the second plurality of optical fibers 32a - 32g. The radiant energy receiving ends 24a - 24g and 34a - 34g may have disposed thereon diffused surfaces, not shown in the FIGURE, as disclosed in the applicant's copending European Patent Application entitled "Diffused Surface Radiant Energy Receiver". The first and second radiant energy receiving plane surfaces are oriented with respect to each other at the predetermined angle $\gamma$ for receiving radiant energy.

The present invention avoids problems arising from the non-homogeneity of the radiant energy beam by taking multiple small samples from the beam which can be averaged to arrive at a radiance value which can be used in later calculations. It will be understood that the greater the number of fiber optics used in the detecting array, the greater the accuracy of the system, as more non-linearity from the signal will be removed. In practical embodiments, a trade off is made between the fiber size, the number of fibers, the desired signal level for detection and the amount of nonuniformity in the radiant energy beam sensed that can be tolerated. Additionally, an interleaved arrangement, an example of which is shown in FIGURE 4, as well as the proximity of the receiving ends of the first plurality of optical fibers with receiving ends of the second plurality of optical fibers tends to average out inaccuracies which might otherwise have arisen due to non-homogenity of the radiant energy beam being received. The methods of the multiple small samplings of the embodiments of the present invention thus serve to approximate a uniform and homogeneous radiant beam by the sampling of a non-homogeneous beam.

Each receiving end 24a - 24g and 34a - 34g receives radiant energy from the portion of the radiant energy beam which impacts on those receiving ends. By transmitting this received radiant energy to the detector, an average radiance for the impacting radiant energy beam is gained and the beam appears to uniform to the system, thereby enabling greater accuracy in calculations made on the basis of the detector output signals.

The fiber optics can be of varying lengths from as short as 3 - 5 millimeters or less up to several meters or more in length. One embodiment utilized a fiber optic length of about 10 centimeters.

It should be understood that although the arrangement of vertically linear arrays of fiber optics shown in FIGURE 4 provides certain advantages, it is not necessary that the receiving ends of each plurality of optical fibers be so disposed. The fibers may be arranged in other array configurations, so long as the receiving ends of the optical fibers are disposed on the same or parallel radiant energy receiving planes.

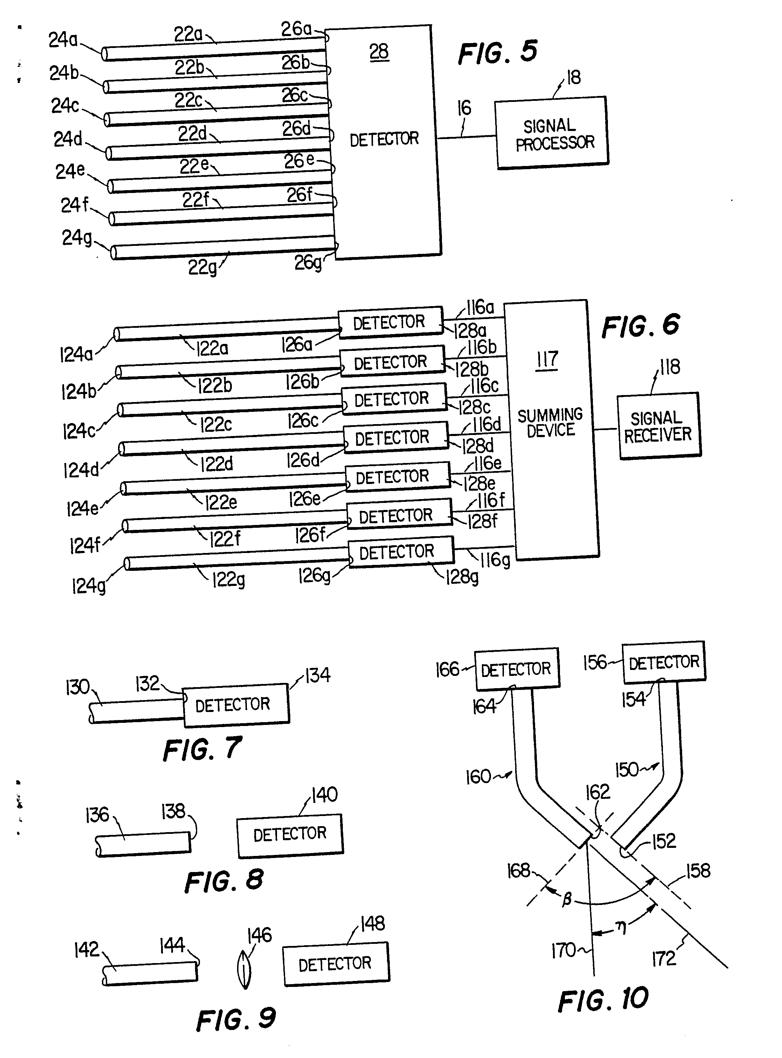

FIGURE 5 is a side view of the first plurality of optical fibers of the invention shown in FIGUREs 3 and 4. As previously described, each of the first plurality of optical fibers 22a - 22g has, respectively, a radiant energy receiving end 24a - 24g and a radiant energy transmitting end 26a - 26g, with each transmitting end 26a - 26g directed toward radiant energy detector 28. Each of the receiving ends 24a - 24g is disposed on or parallel to a first radiant energy receiving plane, not shown in FIGURE 5. Detector 28 is operably connected through signal communication channel 16 to signal receiver and processor 18. It will be understood that the second plurality of optical fibers 32a - 32g are arranged in parallel fashion to the first plurality of optical fibers 22a - 22g shown in FIGURE 5, have receiving ends and transmitting ends, with the transmitting ends directed towards a radiant energy detector which in turn is operably connected to signal receiver and processor 18.

A side view of another preferred embodiment of the present invention is shown in FIGURE 6 which shows a first plurality of optical fibers 122a - 122g having receiving ends 124a - 124g and transmitting ends 126a -126g, with each transmitting end 126a - 126g directed towards a separate one of a first plurality of detectors 128a - 128g, respectively. Each detector 128a - 128g is operably connected by communication channels 116a - 116g to a summing device 117 which can be connected to or incorporated into a signal receiver 118. Each receiving end 124a - 124g is disposed on or parallel to a first receiving plane. Each receiving end 124a - 124g may have disposed thereon a diffused surface as set forth in the applicant's co-pending European Patent Application mentioned above.

At least a portion of the radiant energy received at each receiving end 124a - 124g is transmitted along the respective optical fiber 122a - 122g to a transmitting end 126a - 126g, where at least a portion of the radiant energy is transmitted to a separate one of the first plurality of detectors 128a - 128g. Output signals from each detector 128a - 128g corresponding to the radiant energy detected are communicated via the communication channels 116a - 116g to the summing device 117 which sums the output signals from each of the first plurality of detectors 128a - 128g and communicates the results to the signal receiver 118.

It will be understood that although not shown in FIGURE 6, the embodiment includes a second plurality of optical fibers disposed in a parallel arrangement to the first plurality 122a - 122g shown in FIGURE 6; each directed towards a separate detector which in turn is operably connected to a summing device and the signal receiver 118. Taking the electrical sum of the signals from the first plurality of detectors, in comparison with the electrical sum of output signals from the second plurality of detectors, has the effect of averaging out the optical gradients of the beam impinging on the receiving ends of the optical fibers.

Referring now to FIGURE 7, an optical fiber 130 is shown with transmitting end 132 directly butted to radiant energy detector 134. However, as shown in FIGURE 8, the transmitting end of the optical fiber 130 need not be directly butted to the detector. FIGURE 8 illustrates that optical fiber 136 may have transmitting end 138 spaced from and proximity focused on radiant energy detector 140.

FIGURE 9 shows yet another embodiment, wherein an optical fiber 142 has a transmitting end 144 coupled by a lens 146 to radiant energy detector 148.

FIGURE 10 shows an embodiment which illustrates that it is not necessary that the optical fibers of the first plurality of optical fibers be interleaved or crossed with the optical fibers of the second plurality of optical fibers. The receiving ends of the first and second pluralities of optical fibers may be disposed in a facing arrangement without the fibers crossing. Optical fiber 150, illustrative of a first plurality of optical fibers, has a receiving end 152 and transmitting end 154. Transmitting end 154 is disposed to transmit radiant energy from the optical fiber 150 to radiant energy detector 156. Receiving end 152 is disposed on or parallel to a first radiant energy receiving plane 158. Optical fiber 160, illustrates of a second plurality of optical fibers, has a receiving end 162 and transmitting end 164. Transmitting end 164 is disposed to transmit radiant energy to radiant energy detector 166. Receiving end 162 is disposed on or parallel to a second radiant energy receiving plane 168. First receiving plane 158 and second receiving plane 168 intersect and are oriented with respect to each other at a predetermined angle $\beta$ for receiving radiant energy. Although angle $\beta$ can vary as described above, in the embodiment of FIGURE 10, angle $\beta$ is set at a predetermined angle of 90°. As can be seen, the receiving ends 152 an 162 of optical fibers 150 and 160 are disposed in a facing arrangement without the fibers being interleaved and crossing as they are in the embodiment shown in FIGURE 4.

For purposes of explanation, the direction of impingement of a radiant energy beam impinging on receiving end 162 is shown by line 170. The longitudinal axis of fiber optic 160 at the receiving end 162 is shown by line 172. Angle $\eta$ is the angle between longitudinal axis 172 and direction of impinging radiant energy 170.

The similarities in the geometries of the embodiments shown in FIGURES 3 and 10 should be noted. Although the optical fibers of the first and second pluralities of optical fibers of FIGURE 3 are crossed, the angle $\gamma$ between the first and second receiving planes is 90° just as is angle $\beta$ of the embodiment shown in FIGURE 10 wherein the optical fibers are not crossed. So too, although the receiving ends of the first and second pluralities of optical fibers in the embodiment of FIGURE 3 face away from each other, the angle of impingement $\theta$ is the same as the angle of impingement $\eta$ - (assuming the directions of impingement 42 and 170 are of equal relative orientations to the receiving planes) even though the receiving surfaces of FIGURE 10 face each other.

The angle between the radiant energy receiving plane of the first plurality of optical fibers and the radiant energy receiving plane of the second plurality of optical fibers can be varied from any angle between 10°-170°, depending on the desired application.

The detectors used may consist of silicon pin diodes or any other detector of optical energy including mercet, platinum silicide or any other detector of optical energy.

Use of the present invention should provide a system capable of measuring the angle of light incident on the receiving ends of the optical fibers to an accuracy of normally 20° to between 1/2 of a degree.

While the invention has been described with respect to preferred embodiments, it is to be understood that the invention is capable of numerous modifications, rearrangement and changes that are within the scope of the invention as defined by the appended claims:

## Claims

1. Apparatus for receiving radiant energy, the apparatus comprising:

a plurality of first optical fibers and a plurality of second optical fibers each having a receiving end and a transmitting end, the fibers transmitting respective portions of the radiant energy, received by the apparatus, from said receiving ends to said transmitting ends,

the receiving ends of the first and second fibers being disposed in respectively different common planes which are relative orientated at a predetermined angle, and

first and second detecting means for receiving radiant energy from the transmitting ends of the first and second fibers.

2. Apparatus according to claim 1 wherein the receiving ends of the first fibers are interleaved with the receiving ends of the second fibers.

3. Apparatus according to claim 1 wherein the recieving ends of the first and second fibers are spaced apart.

4. Apparatus according to any one of the preceding claims wherein transmitting ends of the first and second fibers directly abut the first and second detecting means.

5. Apparatus according to any one of claims 1-3 wherein the transmitting ends of the first and second fibers are disposed in the proximity of the first and second detecting means.

6. Apparatus according to any of claims 1-3 wherein a lens is disposed between the transmitting end of each first and second fiber and the first and second detecting means.

7. Apparatus according to any of the preceding claims wherein the first and second detecting means are operative for summing or averaging the radiant energy received from the transmitting ends of the first and second fibers to substantially reduce or eliminate any effects due to optical gradients or non-homogeneities in the radiation received by the apparatus.

8. Apparatus according to any of claims 1-6, wherein the first and second detecting means each comprise a plurality of separate detectors for detecting radiation received from the transmitting ends of the first and second fibers and further including means for summing or averaging signals from the separate detectors in order to substantially reduce or eliminate any effects due to optical gradients or non-homogeneities in the radiation received by the apparatus.

9. Apparatus according to any one of the preceding claims wherein said predetermined angle is between 10° and 170°.

10. A method of reducing or eliminating effects due to optical gradients or non-homogeneities in a beam of radiation, the method comprising the steps of:

providing radiation receiving ends of first and second sets of optical fibers in respective first and second planes which are relatively orientated at a predetermined angle;

detecting signals received from transmitting ends of the optical fibers; and

either as a result of the detecting step, or as a separate step, averaging or summing the detected signals in order to substantially reduce or eliminate any effects due to optical gradients or non-homogeneities in the beam of radiation.

## FIG. 1

## FIG. 2

## FIG. 3

## FIG. 4

*FIG. 5*

*FIG. 6*

*FIG. 7*

*FIG. 8*

*FIG. 9*

*FIG. 10*